# EUROPÄISCHE PATENTSCHRIFT

(11) **EP 2 504 385 B1**
(45) Veröffentlichungstag und Bekanntmachung des Hinweises auf die Patenterteilung: **28.06.2017**
(21) Anmeldenummer: 10805192.1
(22) Anmeldetag: 23.11.2010
(51) Int. Cl.: C08J 9/16, B29B 9/06, B29C 44/34

(54) **VERFAHREN ZUR HERSTELLUNG EINES PET-GRANULATS SOWIE PET-GRANULAT**
PROCESS FOR PRODUCING PET PELLETS, AND PET PELLETS
PROCÉDÉ DE FABRICATION DE GRANULÉS DE PET ET GRANULÉS DE PET

(30) Priorität: 24.11.2009 DE 102009054324
(43) Veröffentlichungstag der Anmeldung: 03.10.2012
(60) Teilanmeldung: 17171735.8
(73) Patentinhaber: Sulzer Chemtech AG, 8404 Winterthur (CH)
(72) Erfinder: STRASSER, Jean, Paul, 52076 Aachen (DE)
(74) Vertreter: Manitz Finsterwald Patentanwälte PartmbB
(86) Internationale Anmeldenummer: PCT/DE2010/075141
(87) Internationale Veröffentlichungsnummer: WO 2011/063806

(56) Entgegenhaltungen:
- WO-A1-2005/087838
- DE-A1- 19 938 008
- DE-A1-102007 027 543
- JP-A- 2001 329 101
- JP-A- 2001 329 103
- US-A1- 2005 110 182
- US-B1- 6 306 921

## Beschreibung

Die Erfindung betrifft ein Verfahren zur Herstellung eines Polyethylenterephthalat (PET)-Granulats, das nach der Granulierung amorph mit einem Kristallisationsgrad unter 10 % vorliegt, bei dem eine PET-Schmelze mit einem Treibmittel oder Treibmittelgemisch und gegebenenfalls Additiven vermischt und extrudiert wird. Des Weiteren betrifft die Erfindung ein PET-Granulat. Ein derartiges Verfahren und ein entsprechendes Granulat sind aus der DE 10 2007 027 543 A1 bekannt.

PET eignet sich hervorragend für Recycling-Prozesse, weshalb neben erstmals erzeugtem PET auch Recycle-PET zur Herstellung mannigfaltiger Produkte verwendet werden kann. Auf dem Markt spielen aus PET hergestellte Produkte eine große Rolle, insbesondere in der Getränkeindustrie und Verpackungsindustrie wo leichtgewichtige Flaschen und Verpackungsfolien benötigt werden, wird bevorzugt PET eingesetzt.

Im Falle des Recyclings werden PET-Flaschen und PET-Folien zerkleinert und das dabei entstehende Granulat zur Herstellung neuer Flaschen, Platten oder Folien verwendet. Das recycelte Material kann aber auch zur Herstellung anderer Kunststoff- Teile dienen, zum Beispiel PET in Form von geschäumten Platten. Aufgrund der geringen Dichte des bereits geschäumten PET-Materials nimmt das bekannte Granulat ein verhältnismäßig großes spezifisches Volumen ein, weshalb Lagerung und Transport kostenintensiv sind.

Aus der US 6,306,921 B1 ist ein Verfahren zur Erzeugung eines Polyester-Granulats, z.B. eines PET-Granulats, offenbart, das jedoch zumindest vorgeschäumt ist. Das Polyester wird mittels eines Extruders geschäumt und der geschäumte Strang einem Granulierer zugeführt, so dass das Ergebnis geschäumte Polyester-Teile sind, die zylinderförmig sind oder auch andere Formen, z.B. eine Buchstaben-Form, annehmen können. Die Form wird dabei durch die Form der Öffnungen im Extruderkopf vorgegeben. Gemäß diesem Stand der Technik das Granulat soll eine Kristallisationsrate von weniger als 15 %, bevorzugt weniger als 10 % aufweisen. Vorgeschäumtes zylinderförmiges oder gar unregelmäßige Formen aufweisendes Granulat kann bei der weiteren Verarbeitung in einem Formteilautomaten nachteilige Aussparungen oder Lücken hinterlassen, so dass das geformte Teil nicht vollständig raumausfüllend ist oder zumindest deutliche Dichteschwankungen aufweist. Das zumindest vorgeschäumte Material weist immer noch eine relativ hohes Volumen/Gewicht-Verhältnis auf, so dass sein Transport volumen- und damit kostenintensiv ist. Auch die noch relativ hohe Kristallisationsrate ist nachteilig aufgrund der deshalb benötigten hohen Temperaturen für die formverändernde weitere Verarbeitung.

Aus der WO 94/12564 ist ein Verfahren zur Herstellung von geschäumtem PET mit hoher Schmelzfestigkeit bekannt, bei dem die Polymerschmelze über einen Extruder geführt wird. Hierbei geht es insbesondere um das Erreichen bestimmter Werte für die Schmelzfestigkeit und erhöhte Kristallisationsraten. So stellt die WO 94/1256 heraus, dass konventionelles PET eine geringe Schmelzfestigkeit hat, weshalb geschmolzenes PET leicht nach dem Schäumen kollabiert. Auch die mechanischen Eigenschaften des geschäumten PET können z.B. aufgrund großer Unterschiede in den Zellgrößen und den Wanddicken nachteilig sein. Trotz des großen Marktpotentials sei die Produktion von geschäumtem PET insbesondere auch durch die Komplexität der Herstellung gering. Es ist offenbart, das Polymer in eine Form zu extrudieren, in der es durch Schäumen seine endgültige Form erhält. Ein Granulierer ist nicht ausdrücklich offenbart.

In Bezug auf andere Polymere als PET sind auch schäumbare Granulate sowie Verfahren zu ihrer Herstellung bekannt. So offenbart die DE 10 2007 050 681 A1 ein Verfahren sowie eine Vorrichtung zur Herstellung eines Polymergranulats, bei dem das Polymer vor und hinter einer Schneckenvorrichtung gekühlt, in der Schneckenvorrichtung mit einem Treibmittel und mit Additiven versetzt und nach dem zweiten Kühlschritt einer Granuliereinrichtung zugeführt wird, bei der es sich auch um einen Unterwassergranulierer handeln kann. Als mögliche Polymere sind namentlich Polystyrol, Polyethylen, Polypropylen und Mischungen hiervon sowie Polyactide und Celluloseacetate genannt. PET, welches eine deutlich höhere Verarbeitungstemperatur verlangt als die in diesem Stand der Technik genannten Polymere, ist als mögliche Alternative nicht genannt.

Die DE 199 38 008 A1 offenbart ein Verfahren zur Herstellung von bioabbaubaren expandierbaren Polymerpartikeln.

Aus der EP 1 517 947 B1 ist schließlich ein Verfahren zur Herstellung eines schäumbaren Polystyrol-Granulats offenbart, bei dem das Polystyrol in einem Extruder mit Treibmittel und Additiven versetzt, gekühlt und einem Unterwassergranulierer zugeführt wird.

Es ist nun Aufgabe der Erfindung, ein Verfahren der eingangs genannten Art sowie ein PET-Granulat zur Verfügung zu stellen, mit dem PET in für Transport, Lagerung und Verarbeitung verbesserter Form bereitgestellt wird.

Bei einem Verfahren der eingangs genannten Art wird die Aufgabe mit den kennzeichnenden Merkmalen des Anspruchs 1 gelöst.

Hierdurch wird erstmals ein schäumbares PET-Granulat zur Verfügung gestellt. Schäumbar bedeutet in diesem Zusammenhang, dass das Granulat keine oder allenfalls geringfügige Verschäumung, also jedenfalls keinen regelrechten Schäum- oder Vorschäumprozess erfahren hat. Eine Verschäumung des Granulats wird vorliegend als geringfügig betrachtet, wenn sein Raumgewicht hiernach noch mindestens 500 kg/m³, bevorzugt mindestens 750 kg/m³, weiter bevorzugt mindestens 800 kg/m³, beträgt. Granulate der hier betroffenen Art weisen einen Durchmesser im Bereich von 0,5 bis 2,5 mm auf.

Dies hat zur Folge, dass das Granulat ein vergleichsweise hohes spezifisches Gewicht und damit ein geringes spezifisches Volumen aufweist. Hierdurch können erhebliche Transport- und Lagerkapazitäten eingespart werden. Das Granulat kann für Folgeprozesse, wie Vorschäumen oder Formteilherstellung, auch in bereits existierenden Anlagen des Standes der Technik, insbesondere auch in solchen für die Verarbeitung von expandierbarem Polystyrol (EPS) eingesetzt werden.

Zu den Prozessparametern zählen insbesondere die Temperaturen des Wasserbades und der Ausgangsstoffe, d. h. des PET, des Treibmittels oder des Treibmittelgemisches und der Additive, oder des jeweils gegebenen Gemisches der Ausgangsstoffe, die Art, Mengen und Mengenverhältnisse der Ausgangsstoffe und die Drücke, insbesondere auch im Wasserbad.

Das erfindungsgemäße Verfahren kann auch so ausgeführt werden, dass die Temperatur und der Druck des Wasserbades im Unterwassergranulierer derart gewählt werden, dass das Granulat im Wesentlichen eine Kugelform einnimmt, woraus wiederum eine vollständige Raumausfüllung mit möglichst gleichmäßiger Dichte im fertigen Formkörper ohne Zwickelräume erreicht werden kann. Dabei kann vor dem Schäumen in einem Formteilautomaten ein Vorschäumprozess vorgesehen werden.

Das erfindungsgemäße Verfahren kann auch so ausgeführt werden, dass die Kühlung des Gemischs im Extruder erfolgt.

Es kann auch vorteilhaft sein, als Extruder einen Doppelschneckenextruder einzusetzen.

In Bezug auf das PET-Granulat wird die vorgenannte Aufgabe dadurch gelöst, dass das Granulat aus mit einem Treibmittel oder einem Treibmittelgemisch begasten, amorphen und nicht oder allenfalls geringfügig aufgeschäumten PET-Kugeln besteht und mit dem erfindungsgemäßen Verfahren erzeugt wird.

Der amorphe Aufbau und die kugelförmige Struktur des Granulats haben für die weitere Verarbeitung deutliche Vorteile: Die Kugelform erleichtert deutlich die Herstellung von Formteilen ohne Zwickelräume sowie mit möglichst gleichmäßiger Dichte und hoher Isotropie. Die Amorphie des Granulatmaterials bewirkt, dass die PET-Kugeln bei vorteilhaft geringen Erweichungstemperaturen von etwa 110 °C bis 125 °C vorgeschäumt werden können. Zudem sind die Verschweißtemperaturen des Materials, auch im geschäumten Zustand, gering. Unter amorph wird verstanden, dass das PET im Granulat ohne messbare Kristallinität ist oder einen Kristallisationsgrad unter 10 %, vorteilhaft unter 5 % aufweist.

Im Folgenden wird eine vorteilhafte Art der Ausführung des erfindungsgemäßen Verfahrens anhand eines Beispiels dargestellt.

Einem Extruder wird, bevorzugt über eine gravimetrische Dosierung, in einer Füllzone PET-Ausgangsmaterial, optional zusammen mit Additiven, zugeführt. Dieses kann in Form eines bereits bestehenden, z. B. Raumtemperatur aufweisenden Granulats zum Beispiel aus zerkleinertem Flaschen-PET erfolgen. Das Ausgangsmaterial kann aber auch aus einem Polymerisationsreaktor stammen. Auch Ausschussmaterial aus vorherigen Granulatproduktionen kann verwendet werden. In einer Aufschmelzzone wird das Material bei etwa 300°C aufgeschmolzen. Diese Temperatur kann auch in der Füllzone herrschen. Ein Treibmittel oder Treibmittelgemisch wird mittels einer Direktbegasung bei ebenfalls etwa 300 °C eingespritzt. Als Treibmittel kommen z.B. CO₂, Propan, Pentan, n-Pentan, cyclo-Pentan; Iso-Butan, HFCKW 152A oder Mischungen hiervon in einer Konzentration von 1,5 Gew.-% bis 12 Gew.-% in Frage. In einer Mischzone werden ggf. notwendige (weitere) Additive, zum Beispiel Kettenverlängerer, bei etwa 280 °C eingemischt. Als Kettenverlängerer kann z.B. PET MASSPET 2834NF von POINTPLASTIC srl in einer Konzentration von 1 Gew.-% bis 4,5 Gew.-%, vorzugsweise 1,5 Gew.-% bis 2,5 Gew.-% eingesetzt werden. Über Förder- und Kühlzonen wird das PET-Treibmittel-Gemisch bei 230 °C bis 260 °C, bevorzugt bei 238 °C bis 245 °C, einem Unterwassergranulierer zugeführt. Die Kühlung kann dabei mittels eines Kühlmittels, z.B. Öl, in den letzten dynamischen Zonen des Extruders selbst und/oder in vor- und/oder nachgeschalteten dynamischen oder statischen Schmelzenkühlern erfolgen.

Nach seinem Austritt aus dem Extruder und ggf. dem Kühler wird das PET einer Unterwassergranulierung zugeführt. Das zugehörige Wasserbad weist eine Temperatur von 25 °C bis 45 °C auf, wodurch das austretende Gemisch abgeschreckt wird. Der Druck beträgt etwa 3 bis 10 bar. Infolge der Abschreckung bleibt das PET im gewünschten amorphen Zustand. Der hohe Wasserdruck verhindert zusammen mit der Temperatur des Wasserbades ein Aufschäumen des Granulats.

Druck und Temperatur des Wasserbades sind so eingestellt, dass begaste, aber nicht geschäumte PET-Granulate mit Durchmessern von 0,5 mm bis 2,5 mm, bevorzugt von 0,8 mm bis 1,2 mm erzeugt werden.

Das auf diese Weise hergestellte PET-Granulat kann dann für die Weiterverarbeitung am Verarbeitungsort vorgeschäumt werden, wodurch man expandierte PET-Beads erhält. Die vorgeschäumten Beads können dann in einem Formteilautomaten weiter verarbeitet werden. In einem Nachschäumprozess werden dabei sämtliche Lücken zwischen den Beads zuverlässig geschlossen, so dass die fertigen Formteile im Wesentlichen lückenlos sind. Des Weiteren kann auf diese Weise eine gleichmäßige isotrope Zellstruktur über das gesamte Formteil erreicht werden.

Die Trennung von Granulatproduktion und Verschäumung bringt einen erheblichen Kostenvorteil für Transport und Lagerung mit sich.

## Patentansprüche

1. Verfahren zur Herstellung eines Polyethylenterephthalat (PET)-Granulats, das nach der Granulierung amorph mit einem Kristallisationsgrad unter 10 % vorliegt, bei dem eine PET-Schmelze mit einem Treibmittel oder Treibmittelgemisch und gegebenenfalls Additiven vermischt und extrudiert wird,
**dadurch gekennzeichnet, dass**
das Gemisch über den Extruder einem ein Wasserbad umfassenden Unterwassergranulierer zugeführt und granuliert wird, wobei der Druck im Wasserbad 3 bis 10 bar und seine Temperatur 25 °C bis 45 °C beträgt, so dass das PET nach der Granulierung mit einem Raumgewicht von mindestens 500 kg/m³ vorliegt.

2. Verfahren nach Anspruch 1 , **dadurch gekennzeichnet, dass** die Temperatur und der Druck des Wasserbades im Unterwassergranulierer derart gewählt werden, dass das Granulat im Wesentlichen eine Kugelform einnimmt.

3. Verfahren nach Anspruch 1 oder 2, **dadurch gekennzeichnet, dass** das Gemisch im Wasserbad abgeschreckt wird.

4. Verfahren nach einem der vorhergehenden Ansprüche, **dadurch gekennzeichnet, dass** die Kühlung des Gemischs im Extruder erfolgt und/oder über nachgeschaltete statische oder dynamische Schmelzenkühler erfolgt.

5. Verfahren nach einem der vorhergehenden Ansprüche, **dadurch gekennzeichnet, dass** der Extruder ein Doppelschneckenextruder ist.

## Claims

1. A method of preparing polyethylene terephthalate (PET) pellets which are present in an amorphous form at a degree of crystallization of less than 10% after the pelletization, in which method a PET melt is mixed with a blowing agent or blowing agent mixture and, optionally, with additives and is extruded, **characterized in that**
the mixture is supplied via an extruder to an underwater pelletizer comprising a water bath and is pelletized, with the pressure in the water bath amounting to 3 to 10 bar and the temperature of said water bath amounting to 25 °C to 45 °C such that the PET is present with a volumetric weight of at least 500 kg/m³ after the pelletization.

2. A method in accordance with claim 1, **characterized in that** the temperature and the pressure of the water bath in the underwater pelletizer are selected such that the pellets substantially adopt a spherical shape.

3. A method in accordance with claim 1 or claim 2, **characterized in that** the mixture is quenched in the water bath.

4. A method in accordance with any one of the preceding claims, **characterized in that** the cooling of the mixture takes place in the extruder and/or via static or dynamic melt coolers connected downstream.

5. A method in accordance with any one of the preceding claims, **characterized in that** the extruder is a twin-screw extruder.

## Revendications

1. Procédé pour la fabrication de granulés de polyéthylène téréphtalate (PET), qui se présentent après granulation sous forme amorphe avec un degré de cristallisation inférieur à 10 %, dans lequel du PET en fusion est mélangé avec un agent propulseur ou un mélange d'agents propulseurs et le cas échéant avec des additifs et est extrudé,
**caractérisé en ce que** le mélange est alimenté via l'extrudeuse à un dispositif de granulation immergé qui comprend un bain d'eau et est transformé en granulés, dans lequel la pression dans le bain d'eau est de 3 à 10 bars et sa température est de 25° C à 45° C, de sorte qu'après la granulation, le PET se présente avec un poids volumique d'au moins 500 kg/m³.

2. Procédé selon la revendication 1, **caractérisé en ce que** la température et la pression du bain d'eau dans le dispositif de granulation immergé sont sélectionnées de telle façon que le granulé adopte sensiblement une forme sphérique.

3. Procédé selon la revendication 1 ou 2, **caractérisé en ce que** le mélange subit une trempe dans le bain d'eau.

4. Procédé selon l'une des revendications précédentes, **caractérisé en ce que** le refroidissement du mélange a lieu dans l'extrudeuse et/ou via des dispositifs de refroidissement statiques ou dynamiques du produit en fusion, disposés à la suite de celle-ci.

5. Procédé selon l'une des revendications précédentes, **caractérisé en ce que** l'extrudeuse est une extrudeuse à double hélice.
